# EUROPEAN PATENT APPLICATION

(11) **EP 2 800 026 A1**
(43) Date of publication of application: **05.11.2014**
(21) Application number: 11878588.0
(22) Date of filing: 29.12.2011
(51) Int. Cl.: G06K 1/12

(54) **HARDWARE AND SOFTWARE SYSTEM FOR APPLYING AND READING INFORMATION FIELDS**

(71) Applicant: Pryakhin, Evgeniy Ivanovich, St.Petersburg 197136 (RU); Larionova, Ekaterina Vladimirovna, St.Petersburg 198332 (RU); Zaharenko, Evgeniy Anatolevich, St.Petersburg 197373 (RU)
(72) Inventor: Pryakhin, Evgeniy Ivanovich, St.Petersburg 197136 (RU); Larionova, Ekaterina Vladimirovna, St.Petersburg 198332 (RU); Zaharenko, Evgeniy Anatolevich, St.Petersburg 197373 (RU)
(74) Representative: Modiano, Micaela Nadia
(86) International application number: PCT/RU2011/001062
(87) International publication number: WO 2013/100794

(57) **Abstract**

The present invention relates to information technologies. More particularly, the invention relates to automated systems for the bit data protection and identification when applied directly onto manufactured products. A hard/software system of the present invention is designed for encoding digital information of any type, its converting into the information field with ultrahigh data writing density to be put directly on the product surface as well as for reading and recognizing the information written earlier.

This hard/software system can be used both for identification of various items and for protection against counterfeit and authenticity guarantee for various items, including those used under extreme environmental conditions (such as high-radioactivity zones, high temperature and strong electromagnetic field areas etc.).

The hard/software system for creating and reading out the information fields with ultrahigh information writing density with improved protection has module design and contains the following devices, blocks and modules: the applying device 1, the reading device 2, the control device 3 that has the software block 4 that includes the information encryption module 5, the control script configuration module 6 for the applying device, the reading out and image acquiring module 7, the decryption and information output module 8 for the reading device, the database block 9, that has the information field applying device database module 10, the item material property database module 11, the processing technological mode database module 12. A personal computer is used as a control block 3.

## Description

The present invention relates to information technologies. More particularly, the invention relates to automated systems for the bit data protection and identification when applied directly onto manufactured products. A hard/software system of the present invention is designed for encoding digital information of any type, its converting into an information field with ultrahigh data writing density to be put directly on the product surface as well as for reading and recognizing the information written earlier.

This hard/software system can be used both to identify various items and for protection against counterfeit and authenticity verification for various-purpose items, including those designed to be used under extreme environmental conditions (such as high-radioactivity zones, high temperature and strong electromagnetic field areas, etc.).

The market advent of counterfeit products necessitated developing the technologies and means ensuring the genuine production univocal identification. The problem of accounting in production as well as item and part movement control becomes nowadays as vital as it was never before. One possible solution of this problem is to encode the necessary information and apply it right on the surface of a part or an item.

Traditionally for the purpose of accounting and tracking metal items are marked by one of the following methods - impact, electrochemical, mechanical and painting. All these methods have a number of disadvantages resulting from their negative effect on the material and a possibility of losing the information or counterfeiting in case of infringing goods manufacturing. Besides, those methods do not solve the automated accounting problem because real time product marking with information to be later steadily by machine-read is impossible.

It is worth noting that automated accounting is especially important in crucial industries such as metallurgy, machinery, power engineering, automotive-tractor industry, etc.

In addition to the product accounting, the identification task has yet another aspect that at least is the same important. Vendors may face groundless charges resulting from the warranty reimbursement requests for the goods that in fact were purchased from other companies offering similar product. To protect the product against falsification the following methods are used: protection elements are implemented that is either hard to reproduce or such reproduction results in legal prosecution for trade mark falsification or patent protected product element counterfeiting.

To protect products several common methods exist, such as holograms, packing, barcode labels, RFID technology etc. Since recently for the purpose of the protection and identification, the entire range of the car parts is marked by DataDot technology (micro-records). Yet most of the technologies suggest applying the information with one or another protection level on intermediate carriers rather than directly on the surface of an item. This seriously compromises the item protection options because it does not guarantee the protection element integrity, unlike when the item surface is marked.

Various systems and devices for applying and reading the identification data mark on items are known.

For example, Russian Patent No. 2199781 describes the method of marking a product or an item or an embodiment with subsequent identification, and the system for carrying out the identification of a product or an item. The group of inventions relates to the tools designed for marking all kinds of products, items and embodiments manufactured by industry or obtained as a result of other business activity with their authenticity verification option. The technological result of the inventions is the guarantee of practical impossibility for counterfeiting, replacement or another unauthorized action with marked items. The method and the system suggest marking items with data containing the encoded information or the digital signature to be applied either to the item itself, or the item label or another information carrier or recorded into a memory device the item contains. Authenticity verification is carried out by means of an identification device designed to convert the abovementioned recorded data into the messages that can be verified cryptographically in a way that any interested party may review the verification results.

This patent covers applying the encoded information containing digital signature to an additional information carrier that should be placed at the item. That does not allow using this technical solution for protection against counterfeit and to guarantee the authenticity of items that should work under extreme environmental conditions (such as high-radioactivity zones, high temperature and strong electromagnetic field areas, etc.).

Also various devices for reading the identification marks are known.
1. Hand-operated contact (CCD) barcode scanners reading the product marking information need either full contact with the barcode surface or should be placed very close to that surface. Manufacturing companies are Argox, ChampTek, CipherLab, Zebex.
2. "Light-pen" scanner is a specialized mobile barcode scanner reading the barcode from plain surfaces. Manufacturing companies: ZB.
3. Hand-operated laser barcode scanners have the longest operating range and the fastest in reading among all types of scanners and allow reading the information at the range of several dozen centimeters from an item. Laser barcode scanners may be single-beam or multi-beam (multi-plane). Manufacturing companies are Metrologic, Symbol, HHP, Zebex, PSC, Cipher.
4. Unattended (automatic) scanners are used to read both linear and certain bidimensional barcode symbols in automatic mode. Manufacturing companies are Metrologic, Symbol, Cipher, HHP, Zebex.
5. Hand-held terminals are multifunctional barcode scanners with built-in memory and a CPU. Such scanner is able to collect and process the data read from barcodes. Manufacturing companies are Symbol, Zebex, CipherLab and Casio.

Russian Patent No. 48399 describes the device for the visualization of an optically invisible mark image. This utility model can visualize hidden images (marks) that identify an item and thus protect it against counterfeiting. The device comprises a tool for cooling-down the verified item ( 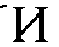 0) that has a mirrored surface (3Π) containing optically invisible mark image created by a modification of the mirrored surface fragment by changing the modified fragment surface energy with an option to visualize that optically invisible mark image by creating the water vapor metastable environment at that mirrored surface area while cooling-down the item to be verified. The visible mark image is obtained as a difference in structures created by metastable environment particles with stable phase but with different surface energy at that mirrored surface area of the verified item. The cooling-down device has a slot for the verified item and it is designed as a Peltier element implementing the Peltier effect. The device may have optical tools for the visible mark image monitoring.

This technical solution has the following disadvantages:
- complicated implementation,
- it cannot be used on items made of different materials,
- this technical solution cannot be used to protect against counterfeit and to verify the authenticity of items designed to work under extreme environmental conditions (such as high-radioactivity zones, high temperature and strong electromagnetic field areas, etc.).

The closest to the proposed solution from the essential feature combination point of view is the technical solution described by Russian Patent No. 2281552. This patent covers the method of an item marking and identification and the identification system for an item with this mark.

The inventions relate to the instruments for marking the items and the implementation of efficient measures preventing unauthorized production. The technological outcome is to make it impossible to counterfeit or replace the marked items. The methods and systems suggest marking items with data containing the encoded information or digital signature by providing an item with a memory device, or with information carrier containing the abovementioned data, or the data is put upon the item. An identification device capable to convert the data into messages that can be verified cryptographically verifies the item authenticity.

The prototype has the following disadvantages:
1. The key or the identification code applied to the item beneath the protection layer can be damaged under normal use and this later may disorientate the authenticity verification;
2. The digital signature is put onto intermediate carrier. The intermediate carrier is a chip or a memory device vulnerable or even destroyable if influenced by electromagnetic field, computer virus attacks, or in case of hacking attacks;
3. Accounting and control procedure needs additional barcode printing on intermediate carriers;
4. Authenticity verification is carried out destroying the masking coating or by checking it in online database through the network if available. In the first case it is impossible to verify authenticity twice (if the equipment must be verified after use), in the second case the information sent by public networks may be intercepted, computer virus infection is possible or the database may be tampered;
5. Not all items can be provided with a memory device or an information carrier (depends on operation conditions and product designation);
6. A memory device, or the barcode information carrier, or additional graphical image with identification data would be placed either on the item or on the label, tag etc., making it possible to easy replace or remove the identified components, what in turn makes it impossible to verify authenticity or read the information about the manufacturer and/or the item.
7. Without access to telephone line or Internet a user cannot verify the item authenticity.

The object of the present technical solution is to develop such hard/software system that would allow applying the information field with ultrahigh data writing density and improved information security directly on items made of different materials and having different shape; reading and decoding the applied information from the items working under any extreme conditions; saving the decoded information in digital form, thus improving its functionality and item identification reliance.

To achieve the object the hard/software system for applying and reading out an information field identifying an item and comprising a device for applying information field, a control device, a database block and an identification field reading device is proposed to be implemented as follows:
- an applying device should be able to apply the information field directly on a surface of items made of different materials and having various shapes,
- a control device must have additional software comprising an encryption module for information field data with a random number generator key, a controlling script configuration module for the applying device, a reading out and image acquiring module, a decryption and information output module for the reading out module made with an option to correct the decoded information in real time,
- to apply the information field the database block should additionally include an information field applying device database module, an item material properties database module and an item processing technological mode database module,
- additionally the reading device should be implemented with an option for reading process visualization and the displayed information field image scaling.

The proposed hard/software system has following additional features:
1. - materials for information field applying may be metals, polymeric compounds, plastics, metal glass, organic glass, wood, ceramics, compound materials, paper, fabrics,
   - shape of items to be marked with information field can be plain, cylindrical, circular, hollow, etc.,
   - to apply information fields onto items made of metals, polymeric compounds, plastics, metal glass, organic glass, wood, ceramics, compound materials the devices based upon solid-state, fiber, gas, chemical and other types of impulse lasers, can be used,
   - to apply the information fields onto items made of paper, organic glass, polymeric compounds, a printer can be used,
   - to apply the information fields onto items made of metals, metallic glass, polymeric compounds, plastics, the devices based upon mechanical dot pressure upon material can be used,
   - as reading devices, optical tools capable to capture and scale images from different surfaces are used, both connected to the control block and self-inclusive, or - more specifically - a mobile digital optical microscope.
   - an information field may include a company logo or another image that may be in color, or a standard barcode, or a matrix barcode (nanobar code), etc.

The proposed hard/software system has the following advantages:
- it is capable to create unique nano-scale information fields with ultrahigh data writing density;
- it is capable to apply nano-scale information fields with ultrahigh data writing density directly on item using lasers and other technologies;
- it is capable to read and decode the nano-scale information fields with ultrahigh data writing density;
- it is capable to save the decoded information in digital form;
- it is cable to identify various-purpose parts and items;
- it allows carrying out inventory auditing, property evaluation and other operations;
- it provides improved item authenticity protection.
- it allows broken part expert evaluation based upon the data recorded into reference specification information field.

Nano-scale information fields with ultrahigh information writing density with improved protection have following specific features:
- a surface to be marked does not need prefinishing;
- large amount of information may be written;
- information may be preserved during the entire item exploitation period, allowing the part identification in critical situations;
- parts can be used under extreme environmental conditions (high temperature, high pressure, aggressive environment, high radiation and strong electromagnetic fields, etc.);
- it is not affected by electromagnetic impulses and radiointerference;
- the barcode may be read on standard equipment;
- it may work under extreme climate and in hazard environment;
- it provides high-degree information protection;
- it provides absolute protection against computer viruses;
- information falsification for making counterfeit products becomes more complicated.

The proposed information field (depending on demands) may contain the manufacturing company logo in color and/or the standard barcode that can be uni-dimensional or planar, and/or nano-scale matrix barcode created directly on a surface of a part or an item.

### Company logo.

A laser beam creates oxide structures less than 100nm width on a surface of metal. Depending on the laser treatment technological mode and on chemical composition of material, these structures obtain different color palettes, thus allowing color image creation on metal surface, particularly the company logo, without using additional colorants.

The amount of the colors depends on the material chemical composition: some materials allow upto 100 colors and even more (for example such is stainless steel), other materials allow only certain colors from black-and-white palette (for example, such is aluminum). Thus, the hard/software system allows precious displaying of a company logo both as a color image and as a hologram.

Color image formation time depends on its dimensions and on the amount of colors the image contains.

### Barcode.

Use of laser technologies allows putting the barcode directly on a part/item, preserving the standard colors for both background and barcode to ensure the information steady read-out with standard scanners.

### Nano-scale matrix barcode (nanobar code).

The text information encoding system used to create information fields may change the code more than 10⁷⁰⁶ times. Recognition or falsification of that amount of information having no individual code table is practically impossible.

The encoded information high density of writing allows creating the information fields on an item surface that contain any text information: chemical composition and mechanical properties of the item, its manufacturing process detailed description etc. The area 1,5x10mm may contain 1962 text character (that is slightly more than one standard typewritten page), while the area 20x25mm may contain five standard typewritten pages of text.

A single standard typewritten text page output takes less than 30 seconds.

The information field is created by laser right on the surface of an item in a form of the item main material nanoclusters. Thus the information field can be used in parts running at higher temperature and pressure, high radiation zones and areas with strong electromagnetic fields, as well as other extreme environmental conditions that are destructive for other types of marks.

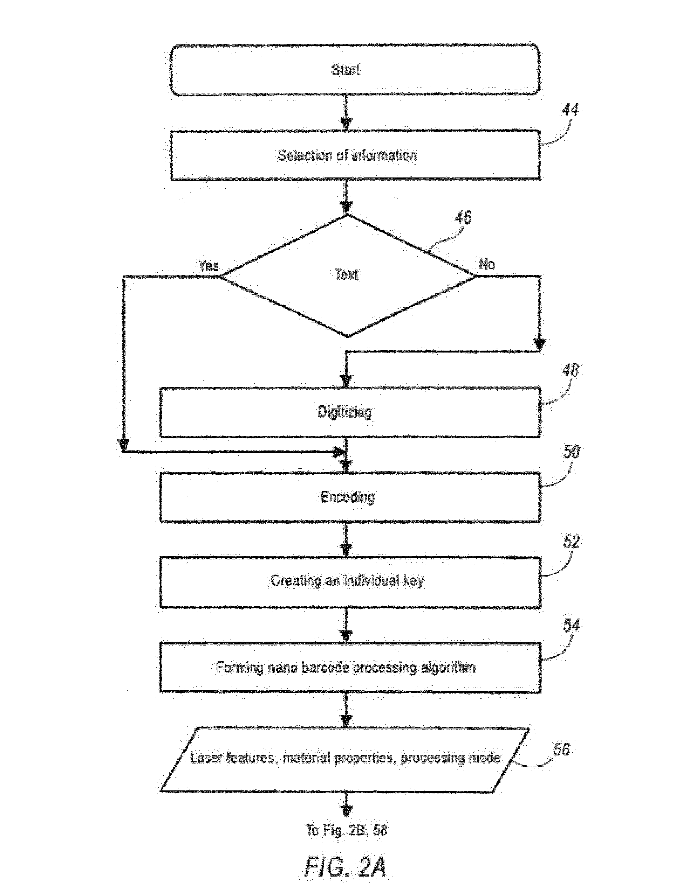

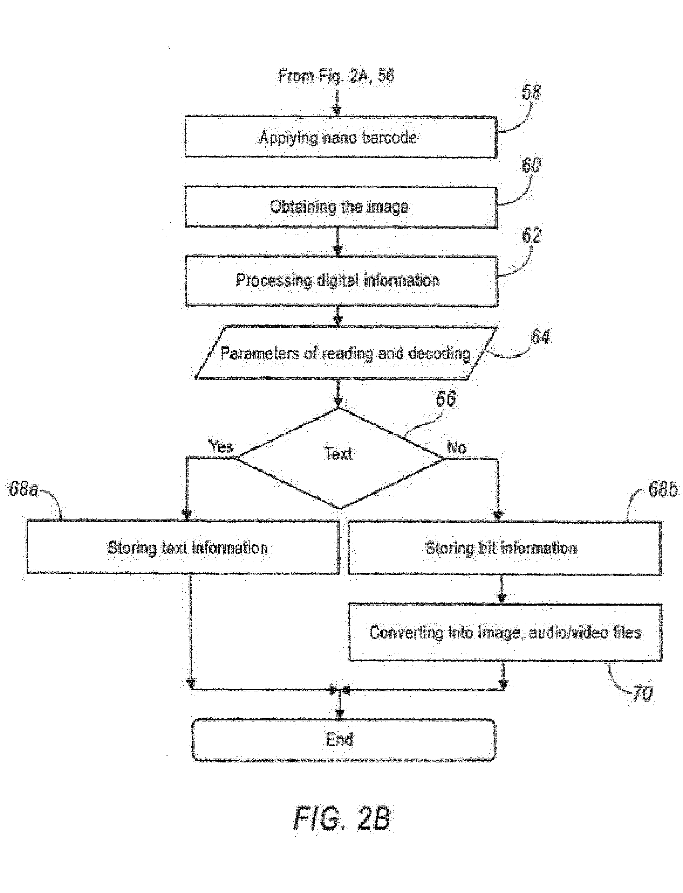

The concept of the present invention will be better understood by referring to the following drawings.

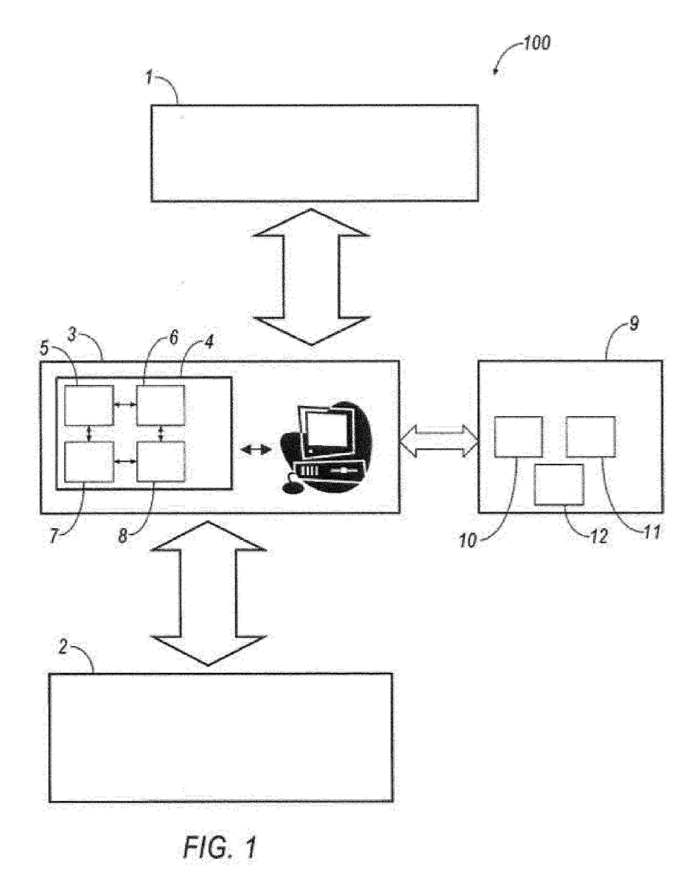

FIG. 1 shows the block scheme of the proposed hard/software system, where:
   1 - applying device,
   2 - reading device,
   3 - control device,
   4 - software block,
   5 - information encryption module,
   6 - control script configuration module,
   7 - reading and image acquiring module,
   8 - decryption and information output module for the reading device,
   9 - database block,
   10 - applying device database module,
   11 - item material property database module,
   12 - treatment technological mode database module
FIG. 2A-2E shows the hard/software system working algorithm.
FIG. 3 shows the embodiment based upon the solid-state impulse laser, where:
   13 - laser pump system
   14 - laser head
   15 - resonator mirrors
   16 - active laser substance
   17 - laser beam output parameter metering system
   18 - alignment laser
   19 - optical gate
   20 - lens
   21 - hinged mirrors
   22 - system of irradiation creation and transportation
   23 - focusing system
   24 - processed part
   25 - focal plane and clearance stabilization system
   26 - polarization plane rotation device
   27 - coordinate device
   28 - irradiation modulation device
   29 - laser parameter sensors
   30 - automated control system managing the hard/software system and the technological process parameters.

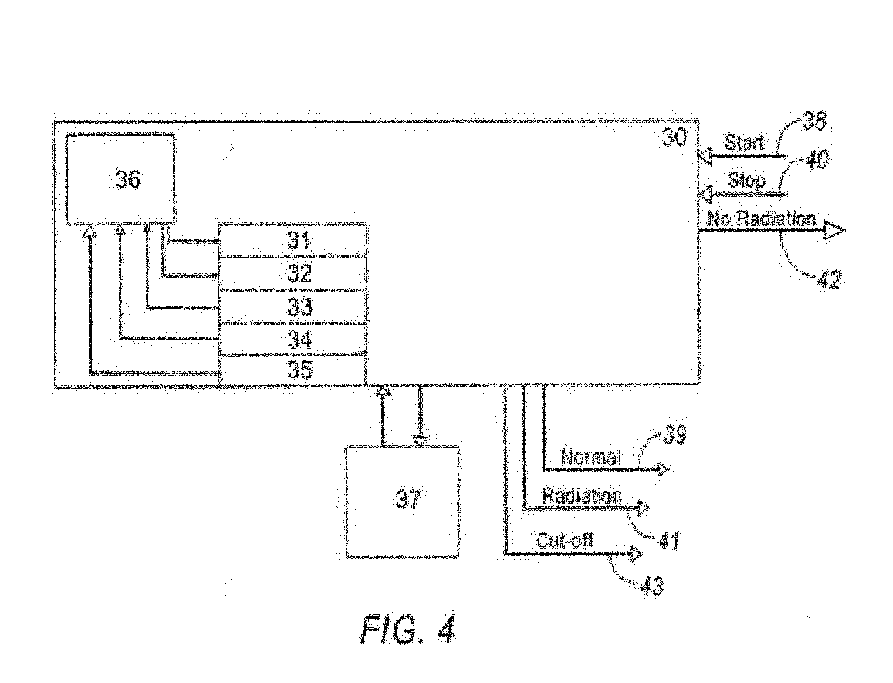

FIG. 4 shows the block scheme of the automated control system managing the parameters and the technological process of the applying device based upon the solid-state impulse laser, where:
   31 - subsystem of the laser parameter sensors (temperature, pressure, working mixture, etc.)
   32 - subsystem of the laser beam parameter sensors (divergence, power, direction diagram axis stability, etc.);
   33 - laser beam lockout device
   34 - active irradiation switch
   35 - current control device allowing changing the irradiation parameters without using a computer
   36 - cooling-down device (YO)
   37 - computer

The button "Start" is for starting the hard/software system (does not work before the cut-off plate is activated).
The button "Stop" is for the emergency complex deactivation.
The red lamp is a no-irradiation indicator.
The green lamp is a hard/software system normal operation indicator.
The "Irradiation" lamp is an active irradiation indicator.
The cut-off plate is the irradiation deactivator, the hinged key that puts the hard/software system into operational mode.

The hard/software system for creating and reading out the information fields with ultrahigh information writing density with improved protection has module design and contains the following devices, blocks and modules:
the applying device 1, the reading device 2, the control device 3 that has the software block 4 that includes the information encryption module 5, the control script configuration module 6 for the applying device, the reading and image acquiring module 7, the decryption and information output module 8 for the reading device, the database block 9, that has the information field applying device database module 10, the item material property database module 11, the processing technological mode database module 12. A personal computer is used as a control block 3.

The hard/software system solves the work process automation task by a number of the automated procedures:
- digital information processing automation with encoding based upon the material, laser device parameters, input parameters;
- laser device control script configuration automation;
- image acquired by reading device processing automation;
- graphical element decoding automation;
- information field formation automation.

The proposed hard/software system works as follows.

The digital information in a form of text, image, executable file, audio-, video-file etc. is processed by the encoding program (the information encryption module 5) by algorithm comprising the random number generator and the individual key. The random number generator protects the encoded information, in fact excluding the brute-force individual key search. In automatic mode the encoding program generates the control program (the controlling script configuration module 6 for the applying device) for the laser device or another information applying device based upon the input data:
- laser or another applying device class and technological features,
- properties of the material where the new generation barcode is applied,
- material treatment technological modes.

According to the generated script the applying device 1, controlled by the control device (no longer mentioned) makes the superficial or the sub-superficial item layer nanoformatting thus creating the information mark (the information field) right on the item.

The image acquired by the reading device 2 is passed as an image into the specialized image decoding and processing program (the reading and image acquiring module 7). Decoding process is carried out based on reading and decoding parameters (the decryption and information output module 8).

The decoding process is carried out with visualization, implementing the feedback allowing the real time information decoding correction.

The decoded information is then saved as a separate file to be converted back into the initial text, image, executable file, audio-, video-file, etc. The decoded text information may be saved as a separate text document.

The reading device 2 working principle is based upon the analogue image acquiring with its subsequent conversion into digital form for further processing.

The information field image is passed to the decryption module 8. For every bit of information a cell in a spatial scalable coordinate grid is automatically created. To determine the identification mark main and supplementary elements a color confidence interval for white and black is defined. At the last stage when larger amount of information is processed, the lacking information fragments, symbols or bits are distinguished manually if necessary. Such mode is called semi-automatic, because the information decryption process still needs user supervision.

The applying device may be, for example, based upon the industrial laser marking unit with minor changes and supplements.

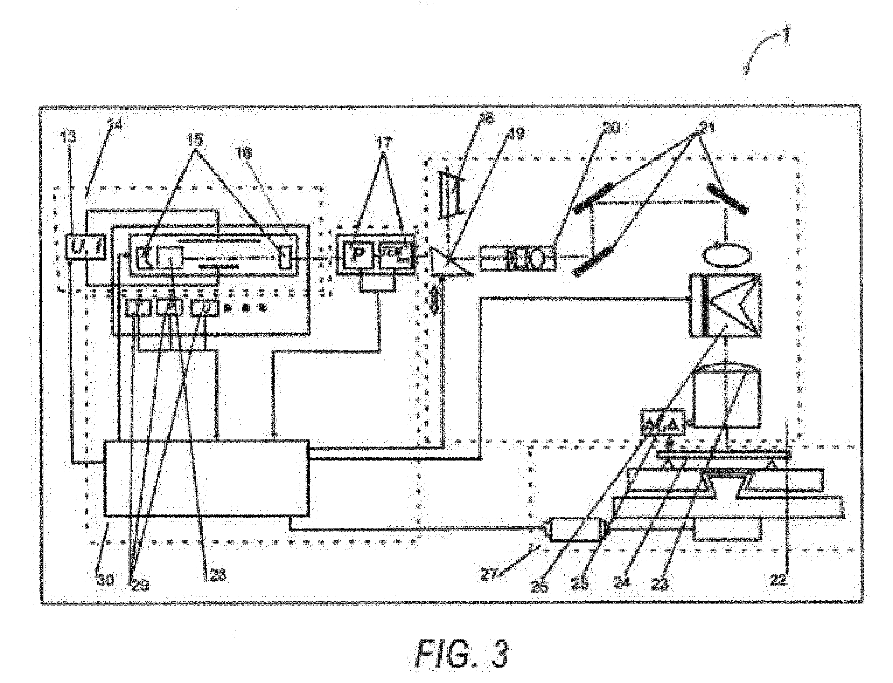

FIG. 3 shows the scheme of a laser marking unit. It consists of the laser head 14, the system of irradiation creation and transportation 22, the coordinate device 27 and the automated control system 30.

The laser head 14 generates the laser beam with optical, power, spatial and temporal parameters necessary for cutting. It contains the laser pump system 13; the active laser substance 16; the resonator mirrors 15 and, whenever necessary, the irradiation modulation device 28.

Usually fiber and solid-state lasers capable to work in impulse mode are used.

The system of irradiation creation and transportation 22 is for the laser beam delivery from the laser head to the processed area.

This system includes: the alignment laser 18; the optical gate 19; optical transformators (the lens) 20; the hinged mirrors 21; the polarization plane rotation device 26; the focusing system 23; the focal plane and clearance stabilization system 25.

The automatic control system ACY 30 is for controlling the laser beam parameters and for the command transfer to the coordinate device 27 runtime modules.

The abovementioned components are installed into the applying device construction according to the well-known assembly schemes.

Additionally the unit includes the following blocks:
17 - laser beam output parameter metering system
25 - focal plane and clearance stabilization system
29 - laser parameter sensors

The ACY 30 represented at FIG. 4 had also been modified to include the following additional components:
- an additional subsystem of the laser parameter sensors 31 (temperature, pressure, working mixture, etc.) with feedback;
- a subsystem of the irradiation parameter sensors 32 (divergence, power, direction diagram axis stability, etc.) with feedback.

The feedback allows monitoring the beam parameters in real time, controlling the information field creation process thus improving the precision of marking.

To have a wider range of items suitable for marking with an information field, as well as to improve precision, the marking unit laser beam energy may be delivered to the target area as follows.

During the treatment, an item may both move linearly in a plane that is perpendicular to the focused beam axis and rotate around this axis.

To deflect the laser beam on the necessary angle, a mirror, or a system of mirrors, or a system of prisms is placed.

The laser head with the lens may move relative to the standing item, or the laser head and the item may move simultaneously.

To eliminate the need to move the laser head relative to the treated item, the laser beam is delivered to the treatment area by a system comprising mirrors/prisms and the lens, that rotate around the beam axis or around the treated item.

Mirror and lens linear motion may be changed to rotation around the laser head axis and motion backwards perpendicular to the laser head axis.

The two-dimensional laser beam motion within a small treatment area may be carried out rotating the mirrors around the two perpendicular axes.

To rotate and focus the laser beam a single spherical mirror can be used.

Laser beam may also reach treatment area through a mirror fixed at the cardan suspension rolling over the two perpendicular axes, allowing item treatment by any desired contour line.

While treating the inner space of a cylindrical item, the mirror with the lens simultaneously move along and rotate around the laser beam axis.

To treat lightweight long pipes or materials supplied in rolls (for example, metal foil), the mirror with lens and the item move simultaneously, and the item may either move linearly along or rotate around the axis that is perpendicular to the laser beam.

The device also has an optical system that controls the lens location relative to the item.

The reading device may have features of a digital microscope and digital image and video capturing processing devices and may comprise two modules:
1) optical module that magnifies images invisible for an unaided eye.
2) digital module that captures the analogue image and converts it into the digital form. It may include, for example:
   - CMOS sensor.
   - Analog-to-digital converter
   - Signal amplifier
   - CPU
   - Memory module

Having reached the CMOS sensor, the image is created at field transistors that change the state under light either blocking the electric current or - vice versa - amplifying the signal. The camera hardware reads the CMOS sensor state changes and builds the image.

A CMOS sensor is a large hybrid chip with integrated camera service systems, analog-to-digital converter, electronic shutter (instant CMOS state data reading system), white balance and image compression systems. To improve the precision and sensitivity and to obtain a better signal to noise ratio each CMOS sensor cell has a microlens focusing the light. The image that is focused behind the lens is then split with a prism into the three identical images each exposing its own matrix though one of the basic color filters - red, green and blue (RGB - red, green, blue). The image is built after the analogue signal from the camera CMOS sensor us converted to the digital form by an analog-to-digital converter ADC. All the exposed CMOS cells participate in image creation. In a process of image processing, complicated interpolation methods are used. Particularly, color components of each neighbor pixel are taken into consideration. As a result of processing, a realistic image is generated that corresponds to the actual image to the fullest extent.

## Claims

1. A hard/software system for applying and reading out an information field identifying and protecting an item, including the information field applying device, the control device, the database block and the information field reading device *with the distinctive feature that* the applying device may apply the information field directly on the surface of items made of different materials and having different shape; the control device additionally comprises the software block with the information field data encryption module and the random number generator key, the controlling script configuration module for the applying device, the reading and image acquiring module, the decryption and information output module for the reading out module with an option for the decoded information real-time correction; the database block additionally has the information field applying device database module, the item material properties database module, and item processing technological mode database module for applying the information field; in addition the reading device is capable to visualize the reading process and to scale the displayed image of an information field.

2. A hard/software system as claimed in claim 1, wherein the materials for applying the information field may be metals, polymeric compounds, plastics, metal glass, organic glass, wood, ceramics, compound materials, paper, fabrics.

3. A hard/software system as claimed in claim 2, wherein the shape of items where the information field is to be applied may be plain, cylindrical, circular, hollow, etc.

4. A hard/software system as claimed in claim 1, wherein in order to apply the information fields onto items made of metals, polymeric compounds, plastics, metal glass, organic glass, wood, ceramics, compound materials the devices based upon solid-state, fiber, gas, chemical and other types of impulse lasers can be used.

5. A hard/software system as claimed in claim 1, wherein in order to apply the information fields onto items made of paper, organic glass, polymeric compounds, a printer can be used.

6. A hard/software system as claimed in claim 1, wherein in order to apply the information fields onto items made of metals, metallic glass, polymeric compounds, plastics, the devices based upon mechanical dot pressure upon material can be used.

7. A hard/software system as claimed in claim 1, wherein as reading devices the optical devices capable to capture and scale images from different surfaces are used, both connected to the control block and self-inclusive.

8. A hard/software system as claimed in claim 7, wherein as a reading device a digital microscope can be used.

9. A hard/software system as claimed in claim 1, wherein the information field may include the company logo or another image that may be in color, or standard barcode or the matrix barcode (nanobar code), etc.
